# EUROPÄISCHE PATENTSCHRIFT

(11) **EP 2 569 249 B1**
(45) Veröffentlichungstag und Bekanntmachung des Hinweises auf die Patenterteilung: **12.07.2017**
(21) Anmeldenummer: 11718746.8
(22) Anmeldetag: 10.05.2011
(51) Int. Cl.: C01G 51/04, C09C 3/08, H01M 4/525, B82Y 30/00, H01G 11/36, H01G 11/46, H01M 4/36, H01M 4/485, H01M 4/505, H01G 11/24, H01G 11/30, H01G 11/50

(54) **VERFAHREN ZUR EINKAPSELUNG VON METALLOXIDEN MIT GRAPHEN UND DIE VERWENDUNG DIESER MATERIALIEN**
METHOD FOR ENCAPSULATING METAL OXIDES WITH GRAPHENE AND USE OF SAID MATERIALS
PROCÉDÉ POUR ENCAPSULER DES OXYDES MÉTALLIQUES AVEC DU GRAPHÈNE ET L'UTILISATION DE CES MATÉRIAUX

(30) Priorität: 14.05.2010 EP 10162807
(43) Veröffentlichungstag der Anmeldung: 20.03.2013
(73) Patentinhaber: BASF SE, 67056 Ludwigshafen am Rhein (DE); Max-Planck-Gesellschaft zur Förderung der Wissenschaften e.V., 80539 München (DE)
(72) Erfinder: IVANOVICI, Sorin, 69126 Heidelberg (DE); YANG, Shubin, 55122 Mainz (DE); FENG, Xinlang, 55122 Mainz (DE); MÜLLEN, Klaus, 50939 Köln (DE)
(86) Internationale Anmeldenummer: PCT/EP2011/057563
(87) Internationale Veröffentlichungsnummer: WO 2011/141486

(56) Entgegenhaltungen:
- US-A1- 2010 086 855
- YAO J ET AL: "In situ chemical synthesis of SnO2-graphene nanocomposite as anode materials for lithium-ion batteries", ELECTROCHEMISTRY COMMUNICATIONS, ELSEVIER, AMSTERDAM, NL, Bd. 11, Nr. 10, 1. Oktober 2009 (2009-10-01), Seiten 1849-1852, XP026685085, ISSN: 1388-2481, DOI: DOI:10.1016/J.ELECOM.2009.07.035 [gefunden am 2009-08-06]
- NORMAN A. LUECHINGER ET AL: "Surfactant-Free, Melt-Processable Metal-Polymer Hybrid Materials: Use of Graphene as a Dispersing Agent", ADVANCED MATERIALS, Bd. 20, Nr. 16, 18. August 2008 (2008-08-18), Seiten 3044-3049, XP55002990, ISSN: 0935-9648, DOI: 10.1002/adma.200800026
- OU Q ET AL: "Characteristics of graphene-layer encapsulated nanoparticles fabricated using laser ablation method", DIAMOND AND RELATED MATERIALS, ELSEVIER SCIENCE PUBLISHERS, AMSTERDAM, NL, Bd. 17, Nr. 4-5, 1. April 2008 (2008-04-01), Seiten 664-668, XP002562266, ISSN: 0925-9635, DOI: DOI:10.1016/J.DIAMOND.2007.10.023 [gefunden am 2007-11-01]
- YUNFENG LU ET AL: "continuous formation of supported cubic and hexagonal mesoporous films by sol-gel dip-coating", NATURE, NATURE PUBLISHING GROUP, LONDON, GB, Bd. 389, 25. September 1997 (1997-09-25), Seiten 364-368, XP002474282, ISSN: 0028-0836, DOI: DOI:10.1038/38699
- DING Y ET AL: "Preparation of nano-structured LiFePO4/graphene composites by co-precipitation method", ELECTROCHEMISTRY COMMUNICATIONS, ELSEVIER, AMSTERDAM, NL, vol. 12, no. 1, 1 January 2010 (2010-01-01), pages 10-13, XP026813072, ISSN: 1388-2481, DOI: 10.1016/J.ELECOM.2009.10.023 [retrieved on 2009-10-21]
- DUMITRACHE F ET AL: "Iron-iron oxide core-shell nanoparticles synthesized by laser pyrolysis followed by superficial oxidation", APPLIED SURFACE SCIENCE, ELSEVIER, AMSTERDAM, NL, vol. 247, no. 1-4, 15 July 2005 (2005-07-15), pages 25-31, XP027771543, ISSN: 0169-4332 [retrieved on 2005-07-15]
- JAMES D WILCOX ET AL: "FACTORS INFLUENCING THE QUALITY OF CARBON COATINGS ON LIFEPO4", JOURNAL OF THE ELECTROCHEMICAL SOCIETY, ELECTROCHEMICAL SOCIETY , vol. 154, no. 5 12 March 2007 (2007-03-12), pages A389-A395, XP003034179, ISSN: 0013-4651, DOI: 10.1149/1.2667591 Retrieved from the Internet: URL:http://jes.ecsdl.org/content/154/5/A38 9

## Beschreibung

Die vorliegende Erfindung betrifft Nanopartikel enthaltend mindestens eine Komponente A ausgewählt aus der Gruppe bestehend aus Co₃O₄, CuO, SnO₂, SnO, NiO, MoO₂, TiO₂, HfO₂, ZrO₂, ZnO, Al₂O₃, SiO₂, Fe₃O₄, Fe₂O₃, LiFePO₄, MnO₂ und RuO₂ und Li-haltigen Oxiden und Mischoxiden von Mn, Ni und/oder Co und mindestens eine Beschichtung aus Graphen. Diese Nanopartikel eignen sich insbesondere als Li-Ionen einlagernde Materialien in den Elektroden von Li-Ionen-Akkumulatoren und Superkondensatoren. Weiterhin betrifft die vorliegende Erfindung ein Verfahren zur Herstellung dieser Nanopartikel, deren Verwendung in elektrochemischen Zellen sowie elektrochemische Zellen und Doppelschichtkondensatoren enthaltend die Nanopartikel.

Es besteht ein großer Bedarf an Batterien und Akkumulatoren als Stromquellen in tragbaren Geräten wie Digitalkameras und Notebooks. Die Batterien und Akkumulatoren sollten für diesen Zweck eine möglichst hohe Energiedichte und eine möglichst lange Lebensdauer aufweisen. Bei den Akkumulatoren tritt hinzu, dass sie möglichst viele Lade-/Entladezyklen durchlaufen können sollten, ohne dass ihre Kapazität dabei abnimmt.

Lithium besitzt das höchste negative Potential aller chemischen Elemente. Batterien und Akkumulatoren mit einer auf Lithium basierenden Anode weisen daher sehr hohe Zellspannungen und sehr hohe theoretische Kapazitäten auf. Unter den auf Lithium basierenden Akkumulatoren besitzen Li-Ionen-Akkumulatoren besondere Vorteile, da diese kein metallisches Lithium enthalten, das mit den in den Akkumulatoren vorhandenen Elektrolyten reagieren und so zu Sicherheitsproblemen führen kann.

In einem Li-Ionen-Akkumulator wird die Zellspannung durch die Verschiebung von Li-Ionen erzeugt. Als Anodenmaterial für Li-Ionen-Akkumulatoren werden üblicherweise Verbindungen eingesetzt, die Li-Ionen einlagern können, beispielsweise Graphit. In letzter Zeit wurden auf Grund ihrer hohen Kapazitäten weitere elektrochemisch aktive Metalle, Halbmetalle und deren Verbindungen wie Sn, Si, Ge, Co₃O₄ und Fe₂O₃ als anodenaktive Materialien für Li-Ionen-Akkumulatoren in Betracht gezogen (Zhang. W. M., et al, Adv. Mater. 2008, 20, 1160; Kim H., et al, Nano letter 2008, 8, 3688; Cui G. L., et al, Adv. Mater. 2008, 20, 3079). Problematisch bei der Verwendung von Li-Ionen einlagernde Materialien als anodenaktive Materialien ist jedoch die große Änderung ihres jeweiligen spezifischen Volumens, die während eines Lade-/Entladezyklus auftritt. Dadurch wird eine teilweise Pulverisierung der Anode verursacht, die zu niedrigeren elektrischen Leitfähigkeiten und niedrigeren revisibelen Kapazitäten führt.

Um dieses Problem zu umgehen, können die anodenaktiven Substanzen in Graphen eingebettet werden. Dabei verteilen sich die anodenaktiven Substanzen auf der Oberfläche dess Graphen oder zwischen den Graphenschichten. Dadurch wird in der Tat eine Verbesserung erreicht. Graphen kann die großen Volumenänderungen während der Lade-/Entladezyklen abpuffern und auch die hohe Leitfähigkeit in der Elektrode aufrecht halten. Nach einer gewissen Anzahl von Lade-/ Entladezyklen tritt jedoch eine Agglomeration der Metalle, Halbmetalle bzw. deren Verbindungen auf, da diese sich im Wesentlichen auf der Oberfläche des Graphens bzw. zwischen großen Graphenschichten befinden. Dies führt auf längerer Sicht ebenfalls zu verminderten Leitfähigkeiten und verminderten Kapazitäten.

Derartige Substanzen sind beispielsweise in Y. Ding et al. Electrochemistry Communications 2010, 12, 10-13 beschrieben. Die darin offenbarten LiFePO₄/Graphen-Kompositmaterialien umfassen Graphenschichten, auf die LiFePO₄-Nanopartikel aufgewachsen sind, wobei die LiFePO₄-Nanopartikel Partikelgrößen von etwa 100 nm aufweisen.

Darüber hinaus sind im Stand der Technik Partikel beschrieben, die anodenaktive Substanzen enthalten, die mit Kohlenstoff oder dessen Verbindungen beschichtet sind. Auch diese Partikel weisen zumindest auf längere Sicht verminderte Leitfähigkeiten und verminderte Kapazitäten auf.

Diese Partikel sind beispielsweise in der US 2010/0086855 offenbart. Sie enthalten Lithiummanganphosphat, das zwei Schichten verschiedener Kohlenstoffbeschichtungen aufweist. Die zwei Schichten werden jeweils ausgehend von organischen Verbindungen, die anschließend carbonisiert werden, hergestellt.

Ebenso beschreiben J.D. Wilcox et al. Journal of the Electrochemical Society 2007, 154, A389-A395 derartige Partikel. Die darin offenbarten LiFePO₄-Nanopartikel weisen eine Kohlenstoffschicht auf.

Aufgabe der vorliegenden Erfindung ist die Bereitstellung von Materialien, die als anodenaktive Materialien in Li-Ionen-Akkumulatoren eingesetzt werden können und eine hohe Kapazität aufweisen, die auch über eine große Anzahl an Lade-/Entladezyklen stabil bleibt.

Diese Aufgabe wird erfindungsgemäß gelöst durch Nanopartikel enthaltend mindestens eine Komponente A ausgewählt aus der Gruppe bestehend aus Co₃O₄, CuO, SnO₂, SnO, NiO, MoO₂, TiO₂, HfO₂, ZrO₂, ZnO, Al₂O₃, SiO₂, Fe₃O₄, Fe₂O₃, LiFePO₄, MnO₂ und RuO₂ und Li-haltigen Oxiden und Mischoxiden von Mn, Ni und/oder Co und mindestens eine Beschichtung aus Graphen, wobei die Nanopartikel einen mittleren Durchmesser von 100 bis 600 nm aufweisen.

Weiterer Gegenstand der Erfindung ist ein Verfahren zur Herstellung dieser Nanopartikel umfassend die Schritte
(a) Bereitstellen einer Suspension umfassend ein Suspensionsmedium und Nanopartikel mit positiver Oberflächenladung enthaltend mindestens eine Komponente A,
(b) Zugabe von Graphenoxidpartikeln zur Suspension, wobei sich die Graphenoxidpartikel auf den Nanopartikeln anlagern, und
(c) Umwandlung der auf den Nanopartikeln angelagerten Graphenoxidpartikel in Graphen,
sowie die Verwendung der erfindungsgemäßen Nanopartikel als Li-Ionen einlagerndes und/oder abgebendes Material in elektrochemischen Zellen, weiterhin elektrochemische Zellen und Superkondensatoren enthaltend die erfindungsgemäßen Nanopartikel.

Die erfindungsgemäßen Nanopartikel sind aus einem Kern enthaltend mindestens eine Komponente A und mindestens einer Beschichtung aus Graphen aufgebaut, die den Kern umhüllt bzw. einkapselt. Graphen besitzt neben einer sehr guten elektrischen Leitfähigkeit eine hohe strukturelle Flexibilität und übersteht daher die während eines Lade-/Entladevorgangs auftretende Volumenänderung der im Kern der Nanopartikel enthaltenen mindestens einen Komponente A ohne wesentliche Beeinträchtigung seiner Struktur.

Die in den Nanopartikeln enthaltene mindestens eine Komponente A wird durch die Beschichtung aus Graphen vollständig von der in anderen Nanopartikel enthaltenen mindestens einen Komponente A abgeschirmt. Während des Ladens/Entladens eines Li-Ionen-Akkumulators mit einer Anode, die die erfindungsgemäßen Nanopartikel als anodenaktives Material enthält, findet daher im Wesentlichen keine Agglomeration der in den Nanopartikeln jeweils enthaltenen mindestens einen Komponente A statt. Die hohe Kapazität einer derartigen Anode bleibt so über eine sehr große Zahl an Lade-/Entladezyklen erhalten. Das in den Nanopartikeln als Beschichtung enthaltene Graphen sorgt zudem für eine sehr gute Leitfähigkeit in der gesamten Elektrode.

Überraschender Weise wurde gefunden, dass Anoden, die die erfindungsgemäßen Nanopartikel als anodenaktives Material enthalten, eine höhere Kapazität aufweisen als Anoden, die die mindestens eine als Komponente A eingesetzte Substanz allein, Graphit allein oder mechanische Mischungen aus Graphen und der als Komponente A eingesetzten Substanz enthalten, bzw. wie bei anteiliger Addition der jeweiligen Kapazitäten zu erwarten wäre. Dies ist in den Beispielen anhand von Co₃O₄ als Komponente A gezeigt. Die Kapazität einer Anode, die Co₃O₄ im Kern und Graphen als Beschichtung enthält, ist auch nach einer großen Anzahl Lade-/Entladezyklen praktisch unverändert, wohingegen Anoden, die lediglich Co₃O₄ oder eine mechanische Mischung aus Graphen und Co₃O₄ enthalten, eine deutliche Abnahme der Kapazität mit steigender Zykluszahl zeigen.

Bei dem erfindungsgemäßen Verfahren zur Herstellung der erfindungsgemäßen Nanopartikel handelt es sich um ein sehr einfach durchzuführendes Verfahren, das von dem vergleichsweise günstigen Rohstoff Graphenoxid ausgeht. Mit diesem Verfahren können Nanopartikel mit einem besonders hohen Anteil an Komponente A und einem vergleichsweise niedrigen Anteil an Graphenbeschichtung hergestellt werden. Dies ist insbesondere von Vorteil bei Nanopartikeln, die als Anodenmaterial in Li-Ionen-Akkumulatoren eingesetzt werden, da eine Erhöhung des Anteils an anodenaktiver Komponente A in den Nanoartikeln eine Erhöhung der reversiblen Kapazität der Anode bewirkt.

Im Folgenden wird die Erfindung im Einzelnen erläutert.

Im Rahmen der vorliegenden Erfindung bedeutet "Graphit" Kohlenstoff, der aus vielen ebenen, übereinander gelagerten Schichten aufgebaut ist, die von kondensierten Sechsringen aus sp²-hybridisierten Kohlenstoffatomen gebildet werden.
Unter "Graphen" wird streng genommen eine einzelne Kohlenstoffschicht aus der Graphitstruktur verstanden, also eine einzelne Schicht aus hexagonal angeordneten, aus sechs Kohlenstoffatomen mit sp²-Hybridisierung bestehenden, kondensierten Ringen. Erfindungsgemäß werden mit "Graphen" jedoch auch Materialien, die aus bis zu 10 Schichten, bevorzugt aus bis zu 5 Schichten, besonders bevorzugt aus bis zu 2 Schichten und insbesondere aus 1 Schicht hexagonal angeordneter, aus sechs sp²-hybridisierten C-Atomen bestehenden, kondensierten Ringen gebildet werden, bezeichnet.

Unter "Graphitoxid" wird im Rahmen der vorliegenden Erfindung eine dreidimensionale, aus Schichten aufgebaute Struktur verstanden, deren einzelne Schichten aus kondensierten C₆-Ringen besteht, die teilweise mit Carbonyl-, Carboxyl-, Alkohol- und Epoxygruppen funktionalisiert sind. Dabei liegen die einzelnen Schichten nicht mehr wie im Graphit eben vor, sondern ragen teilweise oder vollständig, je nach Grad der Oxidation, zickzack-förmig aus der Ebene hervor.

Als "Graphenoxid" werden erfindungsgemäß Materialien verstanden, die aus bis zu 10 Schichten, bevorzugt aus bis zu 5 Schichten, besonders bevorzugt aus bis zu 2 Schichten und insbesondere aus einer einzelnen Schicht gebildet werden, die aus kondensierten C₆-Ringen gebildet werden, die sauerstofffunktionelle Gruppen wie Epoxid-, Alkohol-, Carboxyl- und/oder Carbonyl-Gruppen tragen.

Ein "Akkumulator" bedeutet im Rahmen der Erfindung eine wiederaufladbare elektrochemische Zelle, auch sekundäre Zelle genannt.

Als "Batterie" wird erfindungsgemäß eine nicht wiederaufladbare elektrochemische Zelle bezeichnet, auch primäre Zelle genannt.

"Superkondensatoren", auch als Ultracapacitors (engl.) bezeichnet, sind Doppelschichtkondensatoren, die im Wesentlichen zwei Elektroden, die mit einem Elektrolyt benetzt sind, umfassen. Beim Anlegen einer Spannung unterhalb der Zusetzungsspannung des Elektrolyten sammeln sich an beiden Elektroden Ionen umgekehrter Polarität. Die beiden Elektroden mit den Ladungsträgerschichten verhalten sich wie zwei in Reihe Geschaltete Kondensatoren. Sie speichern - im Gegensatz zu Batterien und Akkumulatoren - Energie elektrostatisch.

Im Rahmen der vorliegenden Erfindung wird mit "Anode" die negativ geladene Elektrode der elektrochemischen Zelle bezeichnet. An der negativen Elektrode findet beim Laden eines Akkumulators die Reduktion statt, in einem Li-Ionen-Akkumulator werden an der Anode beim Ladevorgang Lithium-Ionen eingelagert. Beim Entladen findet an der negativen Elektrode eine Oxidation statt, bei einem Li-Ionen-Akkumulator werden dabei die eingelagerten Lithium-Ionen abgegeben.

Der Begriff "anodenaktives Material" bzw. "kathodenaktives Material" bezeichnet im Rahmen der vorliegenden Erfindung Materialien, Verbindungen und/oder Substanzen, die als elektrochemisch aktive Materialien/Verbindungen/Substanzen in der Anode bzw. der Kathode von Li-Ionen-Akkumulatoren eingesetzt werden können, insbesondere als Li-Ionen einlagernde Materialien/Verbindungen/Substanzen. Dabei kann es sich um einzelne Verbindungen, Materialien oder Substanzen handeln, es können jedoch auch Mischungen aus verschiedenen Materialien/Verbindungen/Substanzen darunter zusammengefasst sein.

Die erfindungsgemäßen Nanopartikel sind aus einem Kern und mindestens einer Beschichtung aus Graphen aufgebaut, wobei der Kern mindestens eine Komponente A enthält, bevorzugt besteht der Kern aus der mindestens einen Komponente A, so dass die erfindungsgemäßen Nanopartikel einen Kern bestehend aus der mindestens einen Komponente A und mindestens eine Beschichtung aus Graphen enthalten. Die erfindungsgemäßen Nanopartikel umfassend weiterhin mindestens eine Beschichtung aus Graphen, die den Kern möglichst weitgehend, bevorzugt vollständig umhüllt. Bevorzugt bestehen die Nanopartikel aus einem Kern, enthaltend mindestens eine Komponente A und einer Beschichtung aus Graphen, besonders bevorzugt besteht die erfindungsgemäßen Nanopartikel aus einem Kern bestehend aus mindestens einer Komponente A und einer Beschichtung aus Graphen.

Die mindestens eine Komponente A ist erfindungsgemäß ausgewählt aus der Gruppe bestehend aus Co₃O₄, CuO, SnO₂, SnO, NiO, MoO₂, TiO₂, Fe₃O₄, Fe₂O₃, SiO₂, HfO₂, ZrO₂, Al₂O₃, ZnO, LiFePO₄, MnO₂, RuO₂ und Li-haltige Oxide und Mischoxide von Mn, Ni
und/oder Co wie LiMnO₂, LiCoO₂, LiNiO₂, LiMn_{0,5}Ni_{1,5}O₄ und LiMnO₄. Dabei sind erfindungsgemäße Nanopartikel, bei denen die mindestens eine Komponente A ausgewählt ist aus der Gruppe Co₃O₄, CuO, SnO₂, SnO, NiO, MoO₂, TiO₂, Fe₃O₄, Fe₂O₃, SiO₂, ZrO₂, MnO₂ und RuO₂ besonders geeignet für den Einsatz in der Anode von elektrochemischen Zellen, insbesondere in der Anode von Li-Ionen-Akkumulatoren; erfindungsgemäße Nanopartikel, bei denen die mindestens eine Komponente A ausgewählt ist aus der Gruppe LiFePO₄ und Li-haltige Oxide und Mischoxide von Mn, Ni und/oder Co wie LiMnO₂, LiCoO₂, LiNiO₂, LiMn_{0,5}Ni_{1,5}O₄ und LiMnO₄, eignen sich besonders gut für den Einsatz in der Kathode von elektrochemischen Zellen, insbesondere in der Kathode von Li-Ionen-Akkumulatoren.

Erfindungsgemäß können die Nanopartikel eine Komponente A enthalten, es können jedoch auch Mischungen aus zwei oder mehr der als Komponente A einsetzbaren Metallverbindungen und Halbmetallverbindungen in den Nanopartikeln vorhanden sein. Erfindungsgemäß besitzen die erfindungsgemäßen Nanopartikel einen mittleren Durchmesser von 100 bis 600 Nanometern, besonders bevorzugt von 200 bis 400 Nanometern, bestimmt mittels TEM (Transmissionselektronenmikroskopie) oder SEM (Scanningelektronenmikrosko-pie). Die angegeben Werte beziehen sich auf den Partikeldurchmesser nach Herstellung der mit Graphen beschichteten Nanopartikel bevor eine elektrochemische Reaktion stattgefunden hat, beispielsweise die Einlagerung von Li-Ionen oder die Abgabe von Li-Ionen aus Nanopartikeln, die bereits bei der Herstellung Li-Ionen enthalten.

Die erfindungsgemäßen Nanopartikel enthalten üblicherweise 60 bis 97 Gew.-% mindestens einer Komponente A, bevorzugt 70 bis 97 Gew.-%, besonders bevorzugt 75 bis 97 Gew.-%, ganz besonders bevorzugt 80 bis 97 Gew.-% und insbesondere bevorzugt 90 bis 95 Gew.-% mindestens einer Komponente A, bezogen auf das Gesamtgewicht der Nanopartikel. Weiterhin enthalten die erfindungsgemäßen Nanopartikel üblicherweise 3 bis 40 Gew.-% Graphen als Beschichtung, bevorzugt 3 bis 30 Gew.-%, besonders bevorzugt 3 bis 25 Gew.-%, ganz besonders bevorzugt 3 bis 20 Gew.-% und insbesondere bevorzugt 5 bis 10 Gew.-% Graphen als Beschichtung, bezogen auf das Gesamtgewicht der Nanopartikel.

Üblicherweise enthalten die erfindungsgemäßen Nanopartikel 60 bis 97 Gew.-% mindestens einer Komponente A und 3 bis 40 Gew.-% Graphen als Beschichtung, bevorzugt enthalten sie 70 bis 97 Gew.-% mindestens einer Komponente A und 3 bis 30 Gew.-% Graphen als Beschichtung, besonders bevorzugt 75 bis 97 Gew.-% mindestens einer Komponente A und 3 bis 25 Gew.% Graphen als Beschichtung, ganz besonders bevorzugt 80 bis 97 Gew.-% mindestens einer Komponente A und 3 bis 20 Gew.-% Graphen als Beschichtung und insbesondere bevorzugt 90 bis 95 Gew.-% mindestens einer Komponente A und 5 bis 10 Gew.-% Graphen als Beschichtung, jeweils bezogen auf das Gesamtgewicht der Nanopartikel.

Gemäß einer bevorzugten Ausführungsform der Erfindung bestehen die Nanopartikel aus 60 bis 97 Gew.-% mindestens einer Komponente A und 3 bis 40 Gew.-% Graphen als Beschichtung, bevorzugt bestehen sie aus 70 bis 97 Gew.-% mindestens einer Komponente A und 3 bis 30 Gew.-% Graphen als Beschichtung, besonders bevorzugt aus 75 bis 97 Gew.-% mindestens einer Komponente A und 3 bis 25 Gew.-% Graphen als Beschichtung, ganz besonders bevorzugt aus 80 bis 97 Gew.-% mindestens einer Komponente A und 3 bis 20 Gew.-% Graphen als Beschichtung und insbesondere bevorzugt bestehen sie aus 90 bis 95 Gew.-% mindestens einer Komponente A und 5 bis 10 Gew.% Graphen als Beschichtung, jeweils bezogen auf das Gesamtgewicht der Nanopartikel.

Die erfindungsgemäßen Nanopartikel können nach dem folgenden erfindungsgemäßen Verfahren hergestellt werden, das die Schritte
(a) Bereitstellen einer Suspension umfassend ein Suspensionsmedium und Nanopartikel mit positiver Oberflächenladung enthaltend mindestens eine Komponente A,
(b) Zugabe von Graphenoxidpartikeln zur Suspension aus Schritt (a), wobei sich die Graphenoxidpartikel auf den Nanopartikeln anlagern, und
(c) Umwandlung der auf den Nanopartikeln angelagerten Graphenoxidpartikel in Graphen
umfasst.

Das Verfahren zur Herstellung der Nanopartikel mit mindestens einer Beschichtung aus Graphen beruht im Wesentlichen darauf, Nanopartikel mit einer positiven Oberflächenspannung in Suspension bereit zu stellen und Graphenoxidpartikel zuzugeben. Die Graphenoxidpartikel tragen an sich eine negative Ladung, so dass sich auf Grund der elektrostatischen Anziehungskraft die Graphenoxidpartikel auf den Nanopartikeln mit positiver Oberflächenladung anlagern und mit Graphenoxid beschichtete Nanopartikel erhalten werden. Die Nanopartikel werden von Graphenoxid umhüllt bzw. eingekapselt. Der zweite wesentliche Schritt besteht in der sich anschließenden Reduktion des die Nanopartikel umhüllenden/einkapselnden Graphenoxids zu Graphen. Dieses Verfahren kann somit auch als Verfahren zur Einkapselung von Metallverbindungen und Halbmetallverbindungen mit Graphen bezeichnet werden.

In Schritt a) wird eine Dispersion bereitgestellt, die ein Suspensionsmedium sowie Nanopartikel mit positiver Oberflächenladung enthaltend mindestens eine Komponente A umfasst. Die positive Oberflächenladung der Nanopartikel kann durch die Modifikation der Oberfläche der Nanopartikel mit funktionellen Gruppen und/oder durch Adsorption mindestens eines kationischen Tensids auf der Oberfläche der Nanopartikel und/oder Einstellen des pH-Wertes der Suspension hervorgerufen werden.

Das Suspensionsmedium kann prinzipiell aus allen Lösungsmitteln ausgewählt werden, die Graphenoxid dispergieren können, insbesondere kann das Suspensionsmedium aus polaren protischen und aprotischen Lösungsmitteln ausgewählt werden, beispielsweise können Alkohole, Wasser, Glykole wie Ethylenglykol und Propylenglykol, Acetate wie Essigsäureethylester sowie N-Methylpyrrolidon, Dimethylformamid etc. und Mischungen davon eingesetzt werden. Erfindungsgemäß bevorzugt umfasst die Suspension ein wasserhaltiges Suspensionsmedium.

Wird die positive Oberflächenladung der Nanopartikel durch Modifikation der Oberfläche der Nanopartikel durch funktionellen Gruppen hervorgerufen, so werden die funktionellen Gruppen ausgewählt aus positiv geladenen funktionellen Gruppen und Vorläufern von positiv geladenen funktionellen Gruppen, bevorzugt sind die funktionellen Gruppen ausgewählt aus Aminogruppen und Ammoniumgruppen, besonders bevorzugt aus NR₂ und NR₃⁺, wobei jedes R unabhängig voneinander ausgewählt ist aus H; C₁-C₆-Alkyl und C₁-C₆-Hydroxyalkyl und wobei ein oder mehrere R an mehr als eine NR₂- und/oder NR₃⁺-Gruppe gebunden sein können.

Die Modifikation der Oberfläche der Nanopartikel mit funktionellen Gruppen ist dem Fachmann bekannt. Zur Modifikation können beispielsweise Aminoalkyloxysilylverbindungen wie N-[3-(Trimethoxysilyl)propyl]ethylendiamin und Aminopropyltrimethoxysilan eingesetzt werden. Ein derartiges Verfahren ist beispielsweise in B. Lee et al., Microporous Mesoporous Mater. 122 (2009), 160 und J.S. Bridel et al. Chem. Mater. 22 (2010) 1229 beschrieben. Metall- und Halbmetallpartikel werden üblicherweise zunächst in Gegenwart von Luft oder in Wasser bei hohen Temperaturen (beispielsweise 100 °C) oder mit Sauerstoffplasma vorsichtig an ihrer Oberfläche oxidiert, um eine äußere Oxidschicht auf den Partikeln zu bilden, und anschließend beispielsweise mit den vorstehend beschrieben Aminoalkoxysilylverbindungen funktionalisiert (Hu Y. S., et al, Angew. Chem. Int. Ed. 2008, 47, 1645; Li J., Polymer 2006, 47, 7361). Die eingeführten Aminogruppen können durch Einstellen des pH-Werts in positiv geladene Ammonium-Gruppen überführt werden.

Die Vorläufer der positiv geladenen funktionellen Gruppen können durch weitere Umsetzung oder durch Einstellen des pH-Wertes in positiv geladene funktionelle Gruppen umgewandelt werden. Der pH-Wert kann beispielsweise durch Zugabe von HCl oder Ammoniak eingestellt werden.

Manche Nanopartikel, insbesondere die Metalloxide, können auch ohne Funktionalisierung eine positive Oberflächenladung tragen, dies hängt vom jeweiligen isoelektrischen Punkt und dem in der Suspension herrschenden pH-Wert ab, so dass durch Einstellen des pH-Wertes unterhalb des isoelektrischen Punktes eine positive Oberflächenladung auf den Nanopartikeln hervorgerufen werden kann. Dies kann beispielsweise durch Zugabe von organischen oder anorganischen Säuren wie HCl oder H₂SO₄ erfolgen.

Wird die positive Oberflächenladung der Nanopartikel durch Adsorption mindestens eines kationischen Tensids auf der Oberfläche der Nanopartikel hervorgerufen, so ist erfindungsgemäß bevorzugt, dass das mindestens eine kationische Tensid ausgewählt aus der Gruppe der quartären Ammoniumverbindungen, besonders bevorzugt aus CₙH₂ₙ₊₁N(R)₃Hal mit n = 12, 14, 16 und 18, Hal = Cl und Br und R = CH₃ oder C₂H₅, wobei jedes R gleich oder verschieden sein kann, insbesondere bevorzugt sind Cetyltrimethylammoniumchlorid, Cethyltrimethylammoniumbromid und Cetyltriethylammoniumbromid.

Nanopartikel aus Metallverbindungen und Halbmetallverbindungen können nach den dem Fachmann bekannten Verfahren hergestellt werden. Beispielsweise kann die Herstellung chemisch nach dem Sol-Gel-Verfahren in einem Lösungsmittel erfolgen, Nanopartikel können durch selbstorganisiertes Wachstum auf Oberflächen oder mittels Templaten hergestellt werden, sie können in Plasma oder mit Hilfe von Mikroemulsionstechniken erhalten werden. Ein mögliches Verfahren ist zum Bespiel in Cao A. M., et al, J. Phys. Chem. B, 2006, 110, 15858 beschrieben. Abhängig von der chemischen Natur der gewünschten Nanopartikel eignet sich das eine oder andere Verfahren besser. Vor dem Einsatz in Schritt (a) des erfindungsgemäßen Verfahrens können die Nanopartikel noch oberflächenmodifiziert und/oder aufgearbeitet werden, beispielsweise gewaschen, getrocknet und/oder kalziniert werden.

Die Suspension umfassend ein Suspensionsmedium und Nanopartikel mit positiver Oberflächenladung wird durch Mischen des Suspensionsmediums mit den Nanopartikeln und ggf. einem oder mehreren kationischen Tensiden hergestellt, wobei beispielsweise Ultraschall, Rühren, Schütteln und weitere dem Fachmann bekannten Verfahren angewendet werden können. Dabei können dem Fachmann bekannte Rühr-, Mahl-, und Dispergiervorrichtungen wie ein Ultra-Turrax®-Rührer, Ultraschallfinger, etc. eingesetzt werden.

Die Suspension enthält üblicherweise Nanopartikel enthaltend mindestens eine Komponente A, bevorzugt 0,1 bis 2 Gew.-% und besonders bevorzugt 0,5 bis 1 Gew.-%. Nanopartikel enthaltend mindestens eine Komponente A, bezogen auf das Gesamtgewicht der Suspension.

Wird die positive Oberflächenladung der Nanopartikel durch Adsorption mindestens eines kationischen Tensids auf der Oberfläche der Nanopartikel hervorgerufen, werden üblicherweise 0,1 bis 1 Gew.-% mindestens eines kationischen Tensids, bevorzugt 0,2 bis 0,6 Gew.-% und besonders bevorzugt 0,2 bis 0,4 Gew.-% mindestens eines kationischen Tensids eingesetzt, bezogen auf das Gesamtgewicht der Suspension.

In Schritt (b) des erfindungsgemäßen Verfahrens werden Graphenoxidpartikel zur Suspension gegeben.

Die Herstellung von Graphenoxid ist dem Fachmann bekannt. Graphenoxid kann beispielsweise aus Graphitoxid hergestellt werden, das anschließend aufgespalten (exfoliert) wird. Graphitoxid und Graphenoxid sind auf Grund der in ihnen enthaltenen sauerstofffunktionellen Gruppen negativ geladen, so dass sich Graphitoxid in einem polaren Lösungsmittel in Graphenoxid aufspalten lässt. Dies kann beispielsweise durch Anwendung von Ultraschall unterstützt werden. Graphitoxid ist hydrophil. Exfoliertes Graphenoxid bildet sehr gut dispergierte wässrige Suspensionen.

Die Herstellung von Graphitoxidteilchen ist dem Fachmann ebenfalls bekannt, üblicherweise wird Graphitoxid durch Oxidation von Graphit hergestellt. Durch die Oxidation werden in den Graphit Sauerstoffatome eingebaut, es entstehen vor allem Alkohol-, Epoxy-, Carbonyl- und Carboxylgruppen. Durch diese Gruppen werden die Abstände zwischen den einzelnen Schichten erweitert und die Schichten lassen sich leichter voneinander trennen. Die oxidierten Graphitschichten werden durch die sauerstoffhaltigen Gruppen zudem hydrophiler und besser in Wasser dispergierbar.

Die Herstellung von oxidiertem Graphit erfolgt üblicherweise durch Behandlung von Graphit mit einem Oxidationsmittel und einer Säure, insbesondere einer starken Säure. Als Oxidationsmittel werden insbesondere Chlorate und Permanganate, als Säure insbesondere Schwefelsäure und Salpetersäure eingesetzt.

L. Staudenmaier, Ber. Dt. Chem. Ges. 31, (1898), 1481, und L. Staudenmaier, Ber. Dt. Chem. Ges. 32, (1899), 1394, beschreiben die Herstellung von oxidiertem Graphit, dort als Graphitsäure bezeichnet, durch Umsetzung von Graphit mit Kaliumchlorat in Anwesenheit von rauchender Salpetersäure und konzentrierter Schwefelsäure.

W.S. Hummers, R.E. Offeman, J. Am. Chem. Soc. 80 (1958), 1339, beschreiben die Herstellung von oxidiertem Graphit durch Umsetzung von Graphit mit Natriumnitrat und Kaliumpermanganat in Anwesenheit von Schwefelsäure.

Es ist auch möglich, expandierbaren Graphit, der auch Blähgraphit genannt wird, als Vorstufe für die Herstellung des oxidierten Graphits zu verwenden. In diesem Fall wird der Graphit im ersten Schritt expandiert. Das erhaltene Produkt wird dann z. B. in einer Kugelmühle gemahlen. Als letztes erfolgt die chemische Modifikation wie oben beschrieben entweder durch die thermische Oxidation oder durch die Oxidation in Gegenwart von Schwefelsäure.

Üblicherweise wird das Graphenoxid in Schritt (b) als Suspension zugegeben, bevorzugt als Suspension in einem wasserhaltigen Suspensionsmedium insbesondere als wässrige Suspension.

Die Konzentration an Graphenoxidpartikel nach Zugabe der Graphenoxidpartikel zur Suspension beträgt üblicherweise 0,01 bis 0,5 Gew.-%, bevorzugt 0,02 bis 0,4 und besonders bevorzugt 0,05 bis 0,25 Gew.-%, bezogen auf das Gewicht der in Schritt (b) erhaltenen Mischung. Auf Grund der negativen Ladung der Graphenoxidpartikel lagern sich diese an den positiv geladenen Nanopartikeln an. Nach der Zugabe der Graphenoxidpartikel wird üblicherweise gewisse Zeit abgewartet, damit sich die Graphenoxidpartikel auf der Oberfläche der Nanopartikeln anlagern können. Dazu kann die Mischung beispielsweise 15 Minuten bis 2 Stunden gerührt werden.

In Schritt (c) werden die auf den Nanopartikeln angelagerten Graphenoxidpartikeln in Graphen umgewandelt. Dies kann beispielsweise durch Zugabe eines oder mehrerer Reduktionsmittel zu der aus Schritt (b) erhaltenen Mischung erfolgen. Beispiele für geeignete Reduktionsmittel sind anorganische Reduktionsmittel wie Hydrazin, NaBH₄ und organische Reduktionsmittel wie Hydrochinon, Dimethylhydrazin oder N,N-Diethylhydroxylamin. Bevorzugt wird als Reduktionsmittel Hydrazin eingesetzt.

Die an der Oberfläche angelagerten Graphenoxidpartikel können auch durch thermische Behandlung in Graphen umgewandelt werden. Dazu werden die Nanopartikel mit den angelagerten Graphenoxidpartikeln aus dem Suspensionsmedium abgetrennt, gegebenenfalls gewaschen und getrocknet und durch Erhitzen der mit Graphenoxid beschichteten Nanopartikel auf höchstens 600°C in Inertgasatmosphäre für mindestens eine Minute in Graphen umgewandelt. Dabei werden die beschichteten Graphenoxidteilchen besonders bevorzugt für mindestens 30 Minuten und besonders bevorzugt für 1 Stunde unter Inertgasatmosphäre erhitzt. Das Erhitzen wird üblicherweise nicht länger als 12 Stunden, bevorzugt nicht länger als 6 Stunden durchgeführt. Die Temperatur liegt dabei bevorzugt bei 300°C bis 500°C.

Gegenstand der Erfindung sind auch die nach dem vorstehend beschriebenen Verfahren herstellbaren vorstehend beschriebenen Nanopartikel enthaltend mindestens eine Komponente A und mindestens eine Beschichtung aus Graphen.

Weiterer Gegenstand der vorliegenden Anmeldung ist die Verwendung der erfindungsgemäßen Nanopartikeln als Li-Ionen einlagerndes und/oder abgebendes Material, beispielsweise in den Elektroden elektrochemischer Zellen, insbesondere in Li-Ionen-Akkumulatoren, sowie die Verwendung der erfindungsgemäßen Nanopartikel in Supertkondensatoren. Dabei können die erfindungsgemäßen Nanopartikel als Li-Ionen einlagerndes und/oder abgebendes Material sowohl in der Anode als auch in der Kathode von Li-Ionen-Akkumulatoren und Superkondensatoren eingesetzt werden. Nanopartikel enthaltend Li-haltige Oxide und Mischoxide von Mn, Ni und/oder Co wie LiMnO₂, LiCoO₂, LiNiO₂, LiMn_{0,5}Ni_{1,5}O₄ und LiMnO₄ und/oder LiFePO₄ als Komponente A eignen sich besonders als kathodenaktives Material in Li-Ionen-Akkumulatoren; Nanopartikel enthaltend Co₃O₄, CuO, NiO, MoO₂, TiO₂, SnO₂, SnO, Fe₃O₄, SiO₂, ZrO₂, Fe₂O₃, MnO₂ und/oder RuO₂ als Komponente A eignen sich besonders als anodenaktives Material für Li-Ionen-Akkumulatoren.

Weiterer Gegenstand der vorliegenden Anmeldung sind elektrochemische Zellen und Superkondensatoren enthaltend die erfindungsgemäßen Nanopartikel, insbesondere als Li-Ionen einlagerndes und/oder abgebendes Material in den Elektroden. Bevorzugt sind elektrochemischen Zellen, die die erfindungsgemäßen Nanopartikel in der Anode und/oder Kathode enthalten, insbesondere als anodenaktives und/oder kathodenaktives Material und ganz besonders bevorzugt sind Li-Ionen-Akkumulatoren, die die erfindungsgemäßen Nanopartikel in der Anode und/oder Kathode enthalten. Die Elektroden können weitere übliche, dem Fachmann bekannte Komponenten enthalten wie Bindemittel, weitere Hilfsmittel für die Leitfähigkeit wie Russ und ähnliches.

Li-Ionen-Akkumulatoren sind dem Fachmann aus dem Stand der Technik bekannt. Als Kathoden werden in Li-Ionen-Akkumulatoren häufig Lithium-Metalloxide vom Spinelltyp wie LiCoO₂, LNiO₂, LiFePO₄, oder LiMn₂O₄ eingesetzt. Weiterhin enthalten die Li-Ionen-Akkumulatoren einen wasserfreien Elektrolyten, üblicherweise ein aprotisches Lösungsmittel wie Ethylcarbonat oder Dioxolan und Mischungen derartiger Lösungsmittel sowie darin gelöste Lithiumsalze wie LiPF₆. Weiterhin kann ein Li-Ionen-Akkumulator einen Separator enthalten, der den Anodenraum und den Kathodenraum trennt, jedoch für die Li-Ionen durchlässig ist.

Im Folgenden wird die Erfindung anhand von Beispielen erläutert:

### Beispiel 1: Graphen beschichtete Co₃O₄-Nanopartikel (erfindunasaemäß)

Kobaltoxid wurde durch die Reaktion von Kobaltacetat mit Ethylenglykol in Gegenwart von Polyvinylpyrrolidon (PVP) herstellt, wie in A. M. Cao et al., J Phys. Chem. B. 100 (2006) Seite 15858 beschrieben. Dazu wurden 2,24 g Co(CH₃COO)₂·4H₂O und 1,5 g mM PVP (M_{w} = 58 000) zu 200 ml Ethylenglykol gegeben, wobei eine trübe Lösung erhalten wurde. Die Mischung wurde mit einem Magnetrührer gerührt und unter Argonatmosphäre auf 170°C erhitzt. Nach 30 Minuten wurde das Produkt in mehreren Zentrifugier-/Dispersionszyklen mit Ethanol abgetrennt und bei 500°C für 2 Stunden kalziniert.

Das erhaltene Kobaltoxid wurde mit Hilfe von Ultraschall in 200 ml trockenem Toluol suspergiert. Nach 30 Minuten wurden 20 ml Aminopropyltrimethoxysilan zu der Suspension gegeben und für 12 Stunden unter Rückfluss und Argonschutzgasatmoshäre erhitzt um NH₂-funktionalisiertes Kobaltoxid zu erhalten. Zu 30 ml einer Suspension von NH₂-funktionallisiertem Kobaltoxid (1mg/ml) in Wasser wurde tropfenweise unter Rühren 7,5 mg einer Suspension von Graphenoxidpartikeln in Wasser (0,25mg/ml) zugegeben. Nach einer Stunde wurde 1 ml Hydrazin (35 Gew.-%) zugegeben, um das Graphenoxid zu Graphen zu reduzieren, so dass Graphen beschichtetes Kobaltoxid erhalten wurde.

Die derart hergestellten, Graphen beschichteten Co₃O₄-Nanopartikel wurden mittels Röntgenstreuung, Thermogravimetrie und Elektronenmikroskopie untersucht. Aus der Röntgenstreuung ergab sich, dass die Co₃O₄-Nanopartikel mit einer einzelnen Graphenschicht beschichtet sind. Mit Hilfe der Thermogravimetriemessung wurde ein Co₃O₄-Gehalt der Nanopartikel von 91,5 Gew.-% ermittelt. Gemäß Elektronenmikroskopie beträgt der Durchmesser der Graphen beschichteten Co₃O₄-Nanopartikel etwa 300 nm.

### Beispiel 2 (Messung der Kapazität)

Die elektrochemischen Untersuchungen wurden in Standard-R2032-Knopfzellen durchgeführt. Die Arbeitselektroden wurden durch Mischen der Graphen beschichteten Co₃O₄-Nanopartikel aus Beispiel 1, Co₃O₄ sowie mechanisch mit Graphen vermischtem Co₃O₄ (91,5 Gew.-% Co₃O₄ und 8,5 Gew.-% Graphen) hergestellt. Dazu wurden die jeweiligen aktiven Materialien mit Russ und Polyvinylidenfluorid (PVDF) in einem Gewichtsverhältnis von 80 (aktives Material): 10 (Huss): 10 (PVDF) vermischt und auf Kupferfolie (99,6%, Goodfellow) aufgestrichen. Als Gegenelektrode wurde Lithiumfolie verwendet. Der Elektrolyt bestand aus einer einmolaren LiPF₆-Lösung in Ethylencarbonat (EC)/Dimethylcarbonat (DMC) (Volumenverhältnis von 1:1; Industries Ltd). Die Zellen wurden in einer mit Argon gefüllten Glovebox zusammengebaut.

Die Entlade-/Ladekapazitäten wurden bei einer Stromdichte von 74 mAh/g gemessen. Die Ergebnisse der ersten dreißig Entlade-/Ladezyklen sind in Tabelle 1 dargestellt, in Tabelle 2 sind die Kapazitäten der Elektrode enthaltend die erfindungsgemäßen Nanopartikeln aus Beispiel 1 bei einem Langzeitversuch gezeigt.

**Tabelle 1:**

| Zyklen | Kapazität [mAh/g] | | |
|---|---|---|---|
| | Beispiel 1 (erfindungsgemäß), 91,5 Gew.-% Co₃O₄ | Co₃O₄ (unbeschichtete Nanopartikel hergestellt analog zu Beispiel 1) | Mechanische Mischung aus Co₃O₄ (unbeschichtete Nanopartikel hergestellt analog zu Beispiel 1) |
| 1 | 1147 | 764 | 832 |
| 2 | 1102 | 695 | 820 |
| 5 | 1085 | 605 | 826 |
| 10 | 1077 | 536 | 785 |
| 20 | 1087 | 453 | 693 |
| 30 | 1081 | 398 | 554 |

Die theoretische Kapazität von Graphit alleine beträgt 372 mAh/g. Die theoretische Kapazität sollte gemäß den "double layers"-Lithium-Speichermechanismus von Graphen liegt bei 744 mAh/g liegen. Laut Literatur (G. Wang, et al, Carbon, 2009, 47, 2049) liegt der tatsächliche Wert der Kapazität von Graphen bei etwa 500 mAh/g. Die erfindungsgemäßen Co₃O₄-Nanopartikel mit Graphenbeschichtung zeigen als anodenaktives Material somit eine reversible Kapazität, die deutlich oberhalb der Kapazitäten von Graphit und Graphen alleine, Co₃O₄ alleine und der mechanischen Mischung aus Co₃O₄ und Graphen mit gleichen Anteilen Co₃O₄ und Graphen wie in den erfindungsgemäßen Nanopartikeln liegt.

**Tabelle 2:**

| Zyklen | Beispiel 1 (erfindungsgemäß), 91,5 Gew.-% Co₃O₄Kapazität [mAh/g] | |
|---|---|---|
| | Laden | Entladen |
| 1 | 1681 | 1147 |
| 10 | 1101 | 1077 |
| 20 | 1105 | 1087 |
| 30 | 1101 | 1081 |
| 40 | 1146 | 1128 |
| 50 | 1162 | 1141 |
| 60 | 1154 | 1135 |
| 70 | 1142 | 1114 |
| 80 | 1111 | 1088 |
| 90 | 1093 | 1068 |
| 100 | 1070 | 1050 |
| 110 | 1058 | 1040 |
| 120 | 1045 | 1023 |
| 130 | 1036 | 1014 |

Die Kapazität einer Elektrode mit den erfindungsgemäßen Co₃O₄-Nanopartikeln mit Graphenbeschichtung ist auch nach 130 Lade-/Entladezyklen fast unverändert hoch.

## Patentansprüche

1. Nanopartikel enthaltend mindestens eine Komponente A ausgewählt aus der Gruppe bestehend aus Co₃O₄, CuO, SnO₂, SnO, NiO, MoO₂, TiO₂, HfO₂, ZrO₂, ZnO, Al₂O₃, SiO₂, Fe₃O₄, Fe₂O₃, LiFePO₄, MnO₂ und RuO₂ und Li-haltigen Oxiden und Mischoxiden von Mn, Ni und/oder Co und mindestens eine Beschichtung aus Graphen, wobei die Nanopartikel einen mittleren Durchmesser von 100 bis 600 nm aufweisen.

2. Nanopartikel nach Anspruch 1, **dadurch gekennzeichnet, dass** die Nanopartikel
60 bis 97 Gew.-% mindestens einer Komponente A und
3 bis 40 Gew.-% Graphen als Beschichtung enthalten,
bezogen auf das Gesamtgewicht der Nanopartikel.

3. Nanopartikel nach Anspruch 1 oder 2, **dadurch gekennzeichnet, dass** die Nanopartikel einen mittleren Durchmesser von 200 bis 400 nm aufweisen.

4. Verfahren zur Herstellung von Nanopartikeln nach einem der Ansprüche 1 bis 3 umfassend die Schritte
(a) Bereitstellen einer Suspension umfassend ein Suspensionsmedium und Nanopartikel mit positiver Oberflächenladung enthaltend mindestens eine Komponente A,
(b) Zugabe von Graphenoxidpartikeln zur Suspension, wobei sich die Graphenoxidpartikel auf den Nanopartikeln anlagern, und
(c) Umwandlung der auf den Nanopartikeln angelagerten Graphenoxidpartikel in Graphen.

5. Verfahren nach Anspruch 4, **dadurch gekennzeichnet, dass** die positive Oberflächenladung der Nanopartikel durch Modifikation der Oberfläche der Nanopartikel mit funktionellen Gruppen und/oder Adsorption mindestens eines kationischen Tensids auf der Oberfläche der Nanopartikel und/oder Einstellen des pH-Werts der Suspension hervorgerufen wird.

6. Verfahren nach Anspruch 5, **dadurch gekennzeichnet, dass** die funktionellen Gruppen ausgewählt sind aus positiv geladenen funktionellen Gruppen und Vorläufern von positiv geladenen funktionalen Gruppen.

7. Verfahren nach Anspruch 5 oder 6, **dadurch gekennzeichnet, dass** die funktionellen Gruppen ausgewählt sind aus NR₂ und NR₃⁺, wobei jedes R unabhängig voneinander ausgewählt ist aus H; C₁-C₆-Alkyl und C₁-C₆-Hydroxyalkyl und wobei ein oder mehrere R an mehr als eine NR₂- und/oder NR₃⁺-Gruppe gebunden sein kann.

8. Verfahren nach einem der Ansprüche 5 bis 7, **dadurch gekennzeichnet, dass** das mindestens eine kationische Tensid ausgewählt ist aus der Gruppe der quartären Ammoniumverbindungen.

9. Verfahren nach einem der Ansprüche 4 bis 8, **dadurch gekennzeichnet, dass** die Suspension ein wasserhaltiges Suspensionsmedium umfasst.

10. Verfahren nach einem der Ansprüche 4 bis 9, **dadurch gekennzeichnet, dass** das Graphenoxid durch Zugabe mindestens eines Reduktionsmittels in Graphen umgewandelt wird.

11. Verfahren nach einem der Ansprüche 4 bis 9, **dadurch gekennzeichnet, dass** das Graphenoxid durch Erhitzen der mit Graphenoxid beschichteten Nanopartikel auf höchstens 600 °C in Inertgasatmosphäre für mindestens 1 min in Graphen umgewandelt wird.

12. Verwendung von Nanopartikeln nach einem der Ansprüche 1 bis 3 als Li-Ionen einlagerndes und/oder abgebendes Material in elektrochemischen Zellen und in Superkondensatoren.

13. Elektrochemische Zellen und Superkondensatoren enthaltend Nanopartikel nach einem der Ansprüche 1 bis 3.

## Claims

1. Nanoparticles comprising at least one component A selected from the group consisting of Co₃O₄, CuO, SnO₂, SnO, NiO, MoO₂, TiO₂, HfO₂, ZrO₂, ZnO, Al₂O₃, SiO₂, Fe₃O₄, Fe₂O₃, LiFePO₄, MnO₂ and RuO₂ and Li-containing oxides and mixed oxides of Mn, Ni and/or Co, and at least one coating of graphene, said nanoparticles having a mean diameter of 100 to 600 nm.

2. Nanoparticles according to claim 1, which comprise
60 to 97% by weight of at least one component A and
3 to 40% by weight of graphene as a coating,
based on the total weight of the nanoparticles.

3. Nanoparticles according to claim 1 or 2, which have a mean diameter of 200 to 400 nm.

4. A process for producing nanoparticles according to any of claims 1 to 3, comprising the steps of
(a) providing a suspension comprising a suspension medium and nanoparticles with positive surface charge, comprising at least one component A,
(b) adding graphene oxide particles to the suspension, the graphene oxide particles accumulating on the nanoparticles, and
(c) converting the graphene oxide particles accumulated on the nanoparticles to graphene.

5. The process according to claim 4, wherein the positive surface charge of the nanoparticles is caused by modification of the surface of the nanoparticles with functional groups and/or adsorption of at least one cationic surfactant on the surface of the nanoparticles and/or adjustment of the pH of the suspension.

6. The process according to claim 5, wherein the functional groups are selected from positively charged functional groups and precursors of positively charged functional groups.

7. The process according to claim 5 or 6, wherein the functional groups are selected from NR₂ and NR₃⁺, where each R is independently selected from H; C₁-C₆-alkyl and C₁-C₆-hydroxyalkyl, and where one or more R may be bonded to more than one NR₂ and/or NR₃⁺ group.

8. The process according to any of claims 5 to 7, wherein the at least one cationic surfactant is selected from the group of the quaternary ammonium compounds.

9. The process according to any of claims 4 to 8, wherein the suspension comprises an aqueous suspension medium.

10. The process according to any of claims 4 to 9, wherein the graphene oxide is converted to graphene by addition of at least one reducing agent.

11. The process according to any of claims 4 to 9, wherein the graphene oxide is converted to graphene by heating the graphene oxide-coated nanoparticles to at most 600°C in inert gas atmosphere for at least 1 min.

12. The use of nanoparticles according to any of claims 1 to 3 as material which stores and/or releases lithium ions in electrochemical cells and in supercapacitors.

13. Electrochemical cells and supercapacitors comprising nanoparticles according to any of claims 1 to 3.

## Revendications

1. Nanoparticules contenant au moins un composant A choisi dans le groupe constitué par Co₃O₄, CuO, SnO₂, SnO, NiO, MoO₂, TiO₂, HfO₂, ZrO₂, ZnO, Al₂O₃, SiO₂, Fe₃O₄, Fe₂O₃, LiFePO₄, MnO₂ et RuO₂ et les oxydes contenant du Li et les oxydes mixtes de Mn, Ni et/ou Co et au moins un enrobage de graphène, les nanoparticules présentant un diamètre moyen de 100 à 600 nm.

2. Nanoparticules selon la revendication 1, **caractérisées en ce que** les nanoparticules contiennent
60 à 97 % en poids d'au moins un composant A et
3 à 40 % en poids de graphène en tant qu'enrobage,
par rapport au poids total des nanoparticules.

3. Nanoparticules selon la revendication 1 ou 2, **caractérisées en ce que** les nanoparticules présentant un diamètre moyen de 200 à 400 nm.

4. Procédé pour la production de nanoparticules selon l'une quelconque des revendications 1 à 3, comprenant les étapes
(a) disposition d'une suspension comprenant un milieu de mise en suspension et des nanoparticules à charge superficielle positive, contenant au moins un composant A,
(b) addition de particules d'oxyde de graphène à la suspension, de sorte que les particules d'oxyde de graphène se déposent sur les nanoparticules, et
(c) conversion en graphène des particules d'oxyde de graphène déposées sur les nanoparticules.

5. Procédé selon la revendication 4, **caractérisé en ce que** la charge superficielle positive des nanoparticules est provoquée par modification de la surface des nanoparticules avec des groupes fonctionnels et/ou adsorption d'au moins un tensioactif cationique à la surface des nanoparticules et/ou ajustement du pH de la suspension.

6. Procédé selon la revendication 5, **caractérisé en ce que** les groupes fonctionnels sont choisis parmi des groupes fonctionnels chargés positivement et des précurseurs de groupes fonctionnels chargés positivement.

7. Procédé selon la revendication 5 ou 6, **caractérisé en ce que** les groupes fonctionnels sont choisis parmi NR₂ et NR₃⁺, chaque radical R étant choisi indépendamment des autres parmi H ; des groupes alkyle en C₁-C₆ et hydroxyalkyle en C₁-C₆, et un ou plusieurs radicaux R pouvant être lié(s) sous forme d'un groupe NR₂ et/ou d'un groupe NR₃⁺.

8. Procédé selon l'une quelconque des revendications 5 à 7, **caractérisé en ce que** ledit au moins un tensioactif cationique est choisi dans le groupe des composés d'ammonium quaternaire.

9. Procédé selon l'une quelconque des revendications 4 à 8, **caractérisé en ce que** la suspension comprend un milieu de mise en suspension contenant de l'eau.

10. Procédé selon l'une quelconque des revendications 4 à 9, **caractérisé en ce qu'**on convertit l'oxyde de graphène en graphène par addition d'au moins un réducteur.

11. Procédé selon l'une quelconque des revendications 4 à 9, **caractérisé en ce qu'**on convertit l'oxyde de graphène en graphène par chauffage des nanoparticules enrobées d'oxyde de graphène, à au maximum 600 °C pendant au moins 1 min, dans une atmosphère consistant en un gaz inerte.

12. Utilisation des nanoparticules selon l'une quelconque des revendications 1 à 3, en tant que matériau incorporant et/ou libérant des ions Li dans des cellules électrochimiques et dans des supercondensateurs.

13. Cellules électrochimiques et supercondensateurs contenant des nanoparticules selon l'une quelconque des revendications 1 à 3.
